# EUROPEAN PATENT SPECIFICATION

(11) **EP 2 470 465 B1**
(45) Date of publication and mention of the grant of the patent: **18.03.2015**
(21) Application number: 10726621.5
(22) Date of filing: 28.05.2010
(51) Int. Cl.: G01G 19/08, B66F 17/00

(54) **LIFTING DEVICE AND LIFTING VEHICLE**
HEBEVORRICHTUNG UND HEBEFAHRZEUG
DISPOSITIF DE LEVAGE ET VÉHICULE DE LEVAGE

(30) Priority: 03.06.2009 NL 1037015
(43) Date of publication of application: 04.07.2012
(73) Proprietor: Ravas Europe B.V., 5301 KA Zaltbommel (NL)
(72) Inventor: VAN SEUMEREN, Henri, Petrus, Maria, NL-5328 AA Rossum (NL)
(74) Representative: Jilderda, Anne Ayolt
(86) International application number: PCT/NL2010/050325
(87) International publication number: WO 2010/140880

(56) References cited:
- EP-A2- 0 343 839
- WO-A1-2006/008586
- DE-A1- 3 802 332
- NL-A- 8 600 701
- NL-A- 8 901 884
- US-A- 2 935 213

## Description

The present invention relates to a lifting device for a lifting vehicle comprising at least one lifting fork with an L-shaped body with an upright part and a horizontal part for receiving a cargo thereon, that the at least one lifting fork comprising a pressure or strain-sensitive sensor that is connected functionally to a part thereof and is able to determine a mechanical deformation of the part and, for the purpose of indicating a load moment of the cargo on the at least one lift fork, to generate this as electronic signal to a processing unit which is able and adapted to receive the electronic signal at an input and to compare it to a predetermined threshold value and, in the case the threshold value is exceeded, to generate a warning signal at an output.

A lifting device of the type stated in the preamble is usually applied on lifting vehicles, such as for instance forklift trucks, for displacing goods which are presented and processed in large quantities in distribution centers, storage warehouses and other places. The at least one lift fork of the lifting device is here driven under a cargo with the lifting vehicle, after which the lifting device can be set into operation to raise the cargo to greater or lesser extent from the ground surface. As soon as the cargo is clear of the ground, the whole can be moved to displace the cargo to another location.

A lifting device of the type stated in the preamble is known from international patent application WO2006/008586.

The present invention has for its object to provide a lifting device which obviates the drawbacks of the prior art.

In order to achieve the stated objective, a lifting device of the type stated in the preamble has the feature that the pressure or strain-sensitive sensor is connected to the upright part of the L-shaped body and that the horizontal part is provided with weighing means comprising at least one further pressure or strain-sensitive sensor which is able and adapted to generate a further electronic signal for the purpose of indicating at least a weight of the cargo.

Since a centre of gravity of the cargo will never lie on or above the sensor which is connected to the upright part, irrespective of the placing of the cargo on the lifting device, the mechanical deformation is always linearly proportional to the load moment of the cargo on the at least one lift fork. An attachment of the sensor against the upright part thus enhances a reliability of the signal. The sensor can here be attached to a front side of the upright part facing toward the cargo, but is preferably connected to an opposite rear side of the upright part in order to prevent the possibility of the relatively sensitive sensor being adversely affected by a cargo received on the lifting device. Because of the provision of the weighing means in the horizontal part, and by comparing the electronic signal of the sensor to the further electronic signal of the weighing means, a weight and a placing of the cargo on the lifting device can also be individually determined with high precision as well as the load moment.

A preferred embodiment of the lifting device according to the present invention has the feature that an input of warning means are coupled to the output of the processing unit to generate a warning alert when the warning signal is received. Because the processing unit can thus activate warning means in order to generate a warning alert from the warning signal, the lifting device is able for instance to alert a driver of the lifting vehicle in good time to an imminent instability.

A further preferred embodiment of the lifting device according to the present invention has the feature that the at least one lift fork comprises wireless transmitter means able and adapted to transmit the warning signal to the warning means, and that the at least one lift fork comprises a power supply for the purpose of providing at least the sensor, processing unit and the transmitter means with electronic power supply. The signal can easily be forwarded by the transmitter means to the warning means which are for instance arranged in or on the lifting vehicle instead of on the lifting device itself. Particularly the use of wireless transmitter means avoids wiring having to be arranged between the lifting device and the lifting vehicle. Owing to the provision of a power supply which provides the sensor, processing unit and the transmitter means with electronic power supply the lifting device moreover forms a stand-alone unit which can be mounted in simple manner on a new or already existing lifting vehicle without it being necessary for this purpose to intervene in the construction of the lifting vehicle.

In a particular embodiment the lifting device according to the present invention is characterized in that the warning means are provided on the at least one lift fork and are able and adapted, when the warning signal is received, to generate a sound alert and/or visual alert discernible to a user. The lifting device itself is therefore fully equipped to determine a load moment and, when a predetermined threshold value is exceeded, to generate a warning alert to a driver of the lifting vehicle.

In a further particular embodiment hereof the lifting device according to the present invention is characterized in that the transmitter means are able and adapted to communicate wirelessly with a display panel which is able and adapted to show at least a load diagram in which the load moment is displayed visually. During displacement of a cargo a driver of the lifting vehicle can continuously determine a load moment from the load diagram and, if necessary, take corrective action in the case a maximum threshold value is about to be exceeded.

A further preferred embodiment of the lifting device according to the present invention has the feature that height measuring means are provided to measure an actual lifting height of the at least one lift fork. An actual lifting height of the cargo can thus be determined together with a load moment. The most important factors on which the stability of the lifting vehicle depends can thus be determined, so that the stability of the lifting vehicle can hereby be monitored in extremely reliable manner during a displacement of the cargo.

In order to preserve the stand-alone character, the lifting device according to the present invention is characterized in a further preferred embodiment in that the weighing means are coupled electronically to a power supply and, in yet another further preferred embodiment, that the weighing means are coupled by electronic means to the processing unit. The lifting device is thus able and adapted to also determine, in addition to a load moment, a weight of the cargo and to transmit this as electronic signal to warning means. The lifting device need only be coupled to a lifting vehicle for this purpose, so that there need be no or hardly any intervention in a construction of the lifting vehicle.

The invention further relates to a lifting vehicle comprising a lifting device according to the present invention.

A preferred embodiment of the lifting vehicle according to the present invention has the feature that anti-tilt means are provided which are able and adapted to at least initiate a safety routine when a predetermined maximum load moment is exceeded. A mobile lifting device, in particular a forklift truck, is thus provided which reduces instability.

A further preferred embodiment of the lifting vehicle according to the present invention has the feature that the safety routine comprises one or more operations chosen from the group of reducing the travel speed, decreasing the lifting height, blocking the lifting means and generating a warning alert. These operations increase safety for a driver during a displacement of a cargo with the lifting vehicle.

A particular embodiment of the lifting vehicle according to the present invention has the feature that the anti-tilt means comprise at least warning means for generating a warning alert, and that the safety routine comprises an activation of the warning means. In a further particular embodiment hereof the lifting vehicle according to the present invention is characterized in that the warning alert is an alert discernible to a driver, in particular a visually or auditively discernible alert. Because the driver can discern the alert, he/she is able to respond early in order to reduce instability of the lifting device and/or seek a place of safety.

Another further particular embodiment of the lifting vehicle according to the present invention has the feature that the warning means comprise a display panel able and adapted to display a warning alert to the driver of the lifting device. With such a display panel the driver can optionally be kept continually informed about the stability of the lifting device.

A particular embodiment of the lifting vehicle according to the present invention has the feature that the anti-tilt means comprise blocking means able and adapted to block the lifting means when a predetermined maximum load moment is exceeded. Owing to the blocking means the mobile lifting device is able to intervene directly in the case of imminent instability, so as to thus counter any risk.

The invention will now be further elucidated on the basis of a number of exemplary embodiments and an associated drawing. In the drawing:
- Figure 1: is a perspective view of a first exemplary embodiment of a lifting device according to the invention.
- Figure 2: is a perspective view of a second exemplary embodiment of lifting device according to the invention.
- Figure 3: is a side view of an exemplary embodiment of a lifting vehicle according to the invention.

The figures are otherwise purely schematic and not drawn to scale. Some dimensions in particular may be exaggerated to greater or lesser extent for the sake of clarity.
Corresponding parts are designated as far as possible in the figures with the same reference numeral.

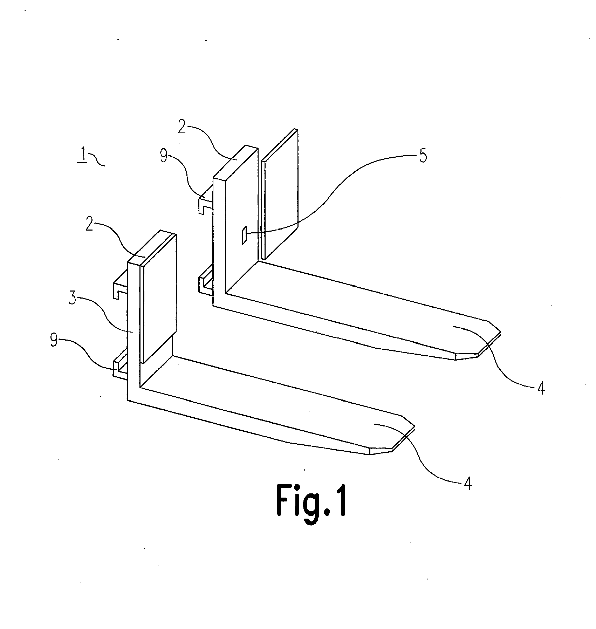

As shown in figure 1 in a first exemplary embodiment of a lifting device according to the invention, lifting device 1 comprises a set of lift forks 2, wherein each lift fork 2 comprises an L-shaped body with an upright part 3 and a horizontal part 4. Using a lifting vehicle, for instance a forklift truck, intended for this purpose lift forks 2 can be driven with the horizontal part 4 under a cargo (not shown) for the purpose of receiving the cargo thereon. The lifting device can then be set into operation via the lifting vehicle in order to lift the cargo from a ground surface. A pressure or strain-sensitive sensor 5, for instance in the form of a so-called secondary transducer such as a strain gauge, is coupled against upright part 3 in order to determine a mechanical deformation thereof resulting from a load moment of the cargo as a consequence of lifting and/or displacing the cargo, and to generate this as electronic signal. Sensor 5 is connected here to a front side of upright part 3 directed toward the cargo. In order to prevent sensor 5 being adversely affected by a cargo received on the lift fork, a cover, here in the form of a protective steel plate, is provided against upright part 3 over sensor 5. Sensor 5 is thus protected behind the cover so that damage resulting from a possibly shifting cargo is prevented. In order to prevent sensor 5 being affected at all by a cargo, in a further preferred embodiment (not shown) sensor 5 can also be attached to a rear side of upright part 3. Upright part 3 itself then forms a barrier here which protects the sensor from being adversely affected by the cargo. Processing means (not shown) are provided to compare the electronic signal to a predetermined threshold value for the purpose, at least when the threshold value is exceeded, of generating a warning signal to enable determining therefrom of a load moment of the cargo. Lifting device 1 can be provided with warning means (not shown), for instance a light source or sound source, on one of the lift forks 2 or both lift forks 2 for the purpose of generating from the warning signal a warning alert discernible to the driver, for instance a sound alert or a visual alert.

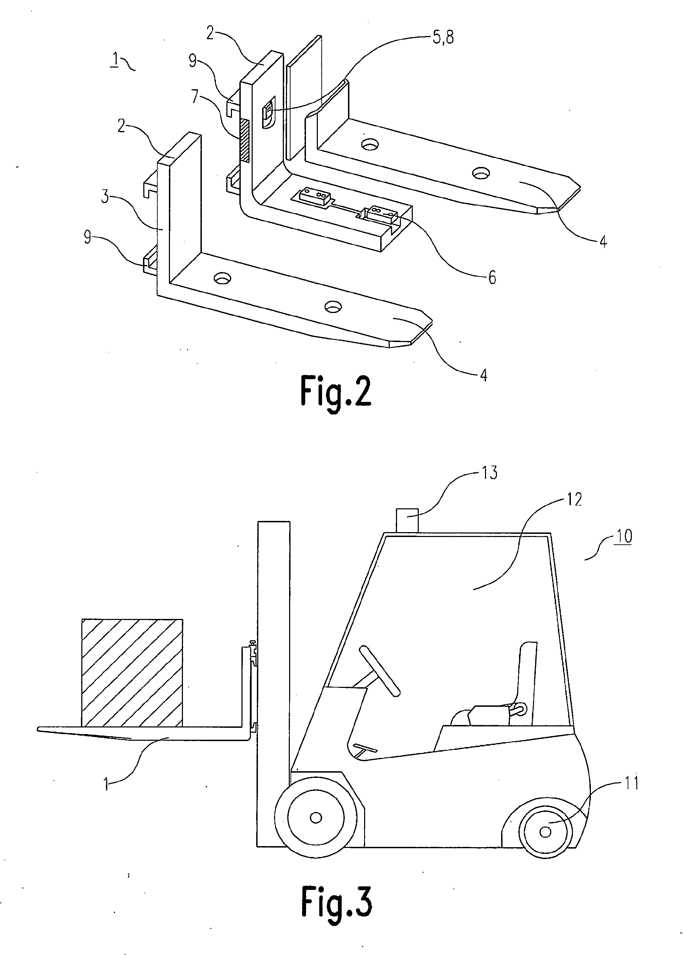

As shown in figure 2 in a second exemplary embodiment of a lifting device according to the invention, lifting device 1 comprises a set of lift forks 2 largely corresponding to those of the first exemplary embodiment as shown in figure 1. Lifting device 1 differs however from that shown in figure 1 in that weighing means 6, in the form of a further pressure or strain-sensitive sensor such as a load cell, are provided in horizontal part 4 in order to measure the load exerted by the cargo on the weighing means as an indication of a weight of the cargo, and to generate this as further electronic signal. Processing means (not shown) are provided for the purpose of comparing the electronic signal and the further electronic signal in order to determine therefrom a weight of the cargo, a placing of the cargo and a load moment of the cargo.

Lifting device 1 also comprises wireless transmitter means 8 which are able and adapted to transmit wirelessly a warning signal coming from the processing means to receiver means of warning means intended for this purpose. All known transmitters can be used for the wireless transmitter means, and use can be made of a known standard for the wireless transfer, such as for instance a Bluetooth connection. A power supply 7 is further provided releasably in upright part 3 to supply power to at least sensor 5, weighing means 6, the processing means and wireless transmitter means 8. Because power supply 7 is integrated releasably into upright part 3, it can be easily exchanged. An at least substantially empty power supply can then be quickly replaced with a full power supply. Use can be made for power supply 7 of all known batteries, although use is preferably made of a rechargeable accumulator. The rechargeable accumulator can be recharged for reuse in simple manner using a charger suitable for this purpose. Lifting device 1 is thus fully equipped to thereby give at least an indication of a load moment and to transmit this wirelessly as electronic signal to warning means. Lifting device 1 can here be assembled and fully calibrated separately of a lifting vehicle, and easily mounted as such on a lifting vehicle. For rapid and simple mounting of lifting device 1 on a lifting vehicle the upright part 3 of lift forks 2 is provided with mounting means 9. Lift forks 2 can for instance be attached by means of mounting means 9 to a lifting board of a lifting vehicle intended for the purpose.

As shown in figure 3 in an exemplary embodiment of a lifting vehicle according to the invention, lifting vehicle 10 is a forklift truck. Forklift truck 10 comprises a mobile frame 11 to enable displacement of a cargo and is provided with lifting means 1, here a lift fork construction with two lift forks 2, for receiving thereon a cargo for displacing. Forklift truck 10 can be driven by a driver (not shown) who for this purpose takes up position in a cab 12. Forklift truck 10 comprises ant-tilt means which are able and adapted to receive a signal from the wireless transmitter means of lifting device 1 resulting from a predetermined maximum load moment being exceeded. The anti-tilt means can then perform a safety routine for the purpose of monitoring the stability of the lifting vehicle. The anti-tilt means comprise for this purpose blocking means (not shown) which intervene in the operation of the lifting vehicle. The blocking means are placed on the lifting means and block lifting of a cargo in the case the stability of the lifting device deteriorates.

Forklift truck 10 further comprises warning means 13 in the form of a light source, such as for instance a flashing light, for generating a warning alert when a predetermined maximum load moment is exceeded. As warning means it is also possible to opt for a loudspeaker (not shown) for generating an alert auditively discernible to the driver. It is also possible to provide lifting device 1 with a plurality of warning signal sources, such as for instance a combination of a light source and a loudspeaker, for the purpose of generating both a light alert and a sound alert, or to provide it with a display panel (not shown) which displays the stability of the lifting device in optionally continuous manner, optionally in combination with a light source and/or a loudspeaker. A flat screen can for instance be used as display panel.

Although the invention has been further elucidated on the basis of only several exemplary embodiments, it will be apparent that the invention is by no means limited thereto. On the contrary, many variations and embodiments are still possible for a person with ordinary skill in the art within the scope of the invention.

## Claims

1. Lifting device (1) for a lifting vehicle comprising at least one lifting fork (2) with an L-shaped body with an upright part (3) and a horizontal part (4) for receiving a cargo thereon, that the at least one lifting fork comprising a pressure or strain-sensitive sensor (5) that is connected functionally to a part thereof and is able to determine a mechanical deformation of the part and, for the purpose of indicating a load moment of the cargo on the at least one lift fork, to generate this as electronic signal to a processing unit which is able and adapted to receive the electronic signal at an input and to compare it to a predetermined threshold value and, in the case the threshold value is exceeded, to generate a warning signal at an output, **characterized in that** the pressure or strain-sensitive sensor (5) is connected to the upright part (3) of the L-shaped body and that the horizontal part (4) is provided with weighing means (6) comprising at least one further pressure or strain-sensitive sensor which is able and adapted to generate a further electronic signal for the purpose of indicating at least a weight of the cargo.

2. Lifting device as claimed in claim 1, **characterized in that** an input of warning means (13) is coupled to the output of the processing unit to generate a warning alert when the warning signal is received.

3. Lifting device as claimed in claim 2, **characterized in that** the at least one lift fork comprises wireless transmitter means (8) able and adapted to transmit the warning signal to the warning means, and that the at least one lift fork comprises a power supply (7) for the purpose of providing at least the sensor, processing unit and the transmitter means with electronic power supply.

4. Lifting device as claimed in claim 2 or 3, **characterized in that** the warning means (13) are provided on the at least one lift fork and are able and adapted, when the warning signal is received, to generate a sound alert and/or visual alert discernible to a user.

5. Lifting device as claimed in one or more of the claims 2-4, **characterized in that** the transmitter means (8) are able and adapted to communicate wirelessly with a display panel which is able and adapted to show at least a load diagram in which the load moment is displayed visually.

6. Lifting device as claimed in one or more of the foregoing claims, **characterized in that** height measuring means are provided to measure an actual lifting height of the at least one lift fork.

7. Lifting device as claimed in one or more of the foregoing claims, **characterized in that** the weighing means (6) are coupled by electronic means to the processing unit.

8. Lifting device as claimed in one or more of the foregoing claims, **characterized in that** the weighing means (6) are coupled electronically to a power supply (7).

9. Lifting vehicle (10) comprising a lifting device (1) as claimed in one or more of the foregoing claims.

10. Lifting vehicle (10) as claimed in claim 9, **characterized in that** anti-tilt means are provided which are able and adapted to at least initiate a safety routine when a predetermined maximum load is exceeded.

11. Lifting vehicle (10) as claimed in claim 10, **characterized in that** the safety routine comprises one or more operations chosen from the group of reducing the travel speed, decreasing the lifting height, blocking the lifting means and generating a warning alert.

12. Lifting vehicle (10) as claimed in claim 10 or 11, **characterized in that** the anti-tilt means comprise at least warning means for generating a warning alert, and that the safety routine comprises an activation of the warning means.

13. Lifting vehicle (10) as claimed in claim 12, **characterized in that** the warning alert is an alert discernible to a driver, in particular a visually or auditively discernible alert.

14. Lifting vehicle (10) as claimed in claim 13, **characterized in that** the warning means comprise a display panel able and adapted to display the warning alert to the driver of the lifting device.

15. Lifting vehicle (10) as claimed in one or more of the claims 9-14, **characterized in that** the anti-tilt means comprise blocking means able and adapted to block the lifting means when a predetermined maximum load moment is exceeded.

## Patentansprüche

1. Hubvorrichtung (1) für ein Hubfahrzeug umfassend wenigstens eine Hubgabel (2) mit einem L-förmigen Körper mit einem aufrechtstehenden Teil (3) und einem horizontalen Teil (4) zum Aufnehmen einer Ladung; die wenigstens eine Hubgabel umfasst einen druck- oder spannungsempfindlichen Sensor (5), der funktional an eines der Teile angeschlossen und dazu in der Lage ist, eine mechanische Verformung des Teiles zu erfassen und zum Zwecke des Anzeigens eines Lastmomentes der Ladung auf der wenigstens einen Hubgabel dies als elektronisches Signal für eine Prozesseinheit zu erzeugen, die in der Lage und derart gestaltet ist, das elektronische Signal an einem Eingang aufzunehmen und mit einem vorgegebenen Grenzwert zu vergleichen und im Falle eines Überschreitens des Grenzwertes ein Warnsignal an einem Ausgang zu erzeugen, **dadurch gekennzeichnet, dass** der druck- oder spannungsempfindliche Sensor (5) an das aufrechtstehende Teil (3) des L-förmigen Körpers angeschlossen ist, und dass das horizontale Teil (4) mit einer Waage (6) ausgerüstet ist, die wenigstens einen weiteren druck- oder spannungsempfindlichen Sensor umfasst, geeignet und derart gestaltet, um ein weiteres elektronisches Signal zum Zwecke des Anzeigens wenigstens des Gewichtes der Ladung zu erzeugen.

2. Hubvorrichtung nach Anspruch 1, **dadurch gekennzeichnet, dass** ein Eingang des Warnsignales (13) an den Ausgang der Prozesseinheit angeschlossen ist, um eine Warneinrichtung bei Aufnehmen des Warnsignales zu erzeugen.

3. Hubvorrichtung nach Anspruch 2, **dadurch gekennzeichnet, dass** die wenigstens eine Hubgabel einen drahtlosen Transmitter (8) umfasst, geeignet und derart gestaltet, um das Warnsignal der Warneinrichtung zu übermitteln, und dass die wenigstens eine Gabel eine Kraftübertragungseinrichtung (7) umfasst, um wenigstens den Sensor, die Prozesseinheit und den Transmitter mit einer elektronischen Kraftzufuhr zu versorgen.

4. Hubvorrichtung nach einem der Ansprüche 2 oder 3, **dadurch gekennzeichnet, dass** die Warneinrichtung (13) an der wenigstens einen Hubgabel angeordnet und dazu in der Lage und gestaltet ist, bei Aufnahme des Warnsignales einen Tonalarm und/oder einen visuellen Alarm zu erzeugen, der von einem Benutzer erkennbar ist.

5. Hubeinrichtung nach einem oder mehreren der Ansprüche 2 bis 4, **dadurch gekennzeichnet, dass** der Transmitter (8) geeignet und derart gestaltet ist, um drahtlos mit einem Display zu kommunizieren, das dazu in der Lage und derart gestaltet ist, wenigstens ein Lastdiagramm zu zeigen, bei welchem das Lastmoment visuell wiedergegeben wird.

6. Hubeinrichtung nach einem oder mehreren der vorausgegangenen Ansprüche, **dadurch gekennzeichnet, dass** eine Höhenmesseinrichtung vorgesehen ist, um eine aktuelle Hubhöhe an der wenigstens einen Hubgabel zu messen.

7. Hubeinrichtung nach einem oder mehreren der vorausgegangenen Ansprüche, **dadurch gekennzeichnet, dass** die Waage (6) über elektronische Mittel an die Prozesseinheit angeschlossen ist.

8. Hubeinrichtung nach einem oder mehreren der vorausgegangen Ansprüche, **dadurch gekennzeichnet, dass** die Waage (6) elektronisch an eine Kraftversorgung (7) angeschlossen ist.

9. Hubfahrzeug (10), umfassend eine Hubvorrichtung (1) gemäß einem oder mehreren der vorausgegangenen Ansprüche.

10. Hubfahrzeug (10) nach Anspruch 9, **dadurch gekennzeichnet, dass** eine Anti-Kippeinrichtung vorgesehen ist, geeignet und gestaltet um wenigstens eine Sicherheits-Routine dann einzuleiten, wenn eine vorgegebene maximale Belastung überschritten wird.

11. Hubfahrzeug (10) nach Anspruch 10, **dadurch gekennzeichnet, dass** die Sicherheits-Routine eine oder mehrere Vorgänge umfasst, ausgewählt aus der Gruppe des Reduzierens der Fahrgeschwindigkeit, Absenkens der Hubhöhe, Blockierens der Hubeinrichtung und Erzeugens eines Warnsignales.

12. Hubfahrzeug (10) nach einem der Ansprüche 10 oder 11, **dadurch gekennzeichnet, dass** die die Anti-Kippeinrichtung wenigstens eine Warneinrichtung zum Auslösen einer Warnung umfasst, und dass die Sicherheitsroutine eine Aktivierung der Warneinrichtung umfasst.

13. Hubfahrzeug (10) nach Anspruch 12, **dadurch gekennzeichnet, dass** die Warneinrichtung eine für den Fahrer erkennbare Einrichtung ist, insbesondere eine visuelle oder hörbare unterscheidbare Einrichtung.

14. Hubfahrzeug (10) nach Anspruch 13, **dadurch gekennzeichnet, dass** die Warneinrichtung ein Display umfasst, geeignet und gestaltet zum Wiedergeben einer Warnung an den Fahrer des Hubfahrzeuges.

15. Hubfahrzeug (10) nach einem oder mehreren der Ansprüche 9 bis 14, **dadurch gekennzeichnet, dass** die Anti-Kippeinrichtung eine Blockiereinrichtung umfasst, geeignet und gestaltet zum Blockieren der Hubeinrichtung bei Überschreiten eines vorgegebenen maximalen Lastmomentes.

## Revendications

1. Dispositif de levage (1) pour un véhicule de levage comportant au moins une fourche de levage (2) comprenant un corps en forme de L doté d'une partie verticale (3) et d'une partie horizontale (4) destinée à recevoir un chargement, la ou les fourche(s) de levage étant équipée(s) d'un détecteur de pression ou sensible à la contrainte (5) qui est raccordé fonctionnellement à une partie de celle(s)-ci et qui permet de détecter une déformation mécanique de cette partie et, aux fins d'indiquer un moment de charge du chargement de la ou des fourche(s) de levage, d'envoyer cette information sous la forme d'un signal électronique à une unité de traitement permettant de recevoir ce signal électronique au niveau d'une entrée et de le comparer à une valeur seuil prédéterminée, et adaptée à cette opération et, si la valeur seuil est dépassée, de générer un signal d'avertissement au niveau d'une sortie, **caractérisé en ce que** le détecteur de pression ou sensible à la contrainte (5) est relié à la partie verticale (3) du corps en forme de L et **en ce que** la partie horizontale (4) est équipée de moyens de pesage (6) comprenant au moins un autre détecteur de pression ou sensible à la contrainte permettant de générer un autre signal électronique aux fins d'indiquer au moins un poids du chargement, et adapté à cette opération.

2. Dispositif de levage selon la revendication 1, **caractérisé en ce qu'**une entrée de moyens d'avertissement (13) est couplée à la sortie de l'unité de traitement afin de générer un avertissement lors de la réception du signal d'avertissement.

3. Dispositif de levage selon la revendication 2, **caractérisé en ce que** la ou les fourche(s) de levage comprend/comprennent des moyens de transmission sans fil (8) permettant de transmettre le signal d'avertissement aux moyens d'avertissement et adaptés à cette opération, et **en ce que** la ou les fourche(s) de levage est/sont dotée(s) d'une alimentation (7) aux fins de fournir au moins au détecteur, à l'unité de traitement et aux moyens de transmission une alimentation électronique.

4. Dispositif de levage selon les revendications 2 et 3, **caractérisé en ce que** les moyens d'avertissement (13) équipent la ou les fourche(s) de levage et permettent, lors de la réception du signal d'avertissement, de générer une alerte sonore et/ou une alerte visuelle perceptible par un utilisateur, et sont adaptés à cette opération.

5. Dispositif de levage selon une ou plusieurs des revendications 2-4, **caractérisé en ce que** les moyens de transmission (8) permettent de communiquer sans fil avec un tableau d'affichage et sont adaptés à cette opération, ledit tableau d'affichage permettant d'afficher au moins un diagramme de charge sur lequel le moment de charge est affiché visuellement et étant adapté à cette opération.

6. Dispositif de levage selon une ou plusieurs des revendications précédentes, **caractérisé en ce qu'**il est doté de moyens de mesure de la hauteur pour mesurer une hauteur de levage réelle de la ou des fourche(s) de levage.

7. Dispositif de levage selon une ou plusieurs des revendications précédentes, **caractérisé en ce que** les moyens de pesage (6) sont reliés par des moyens électroniques à l'unité de traitement.

8. Dispositif de levage selon une ou plusieurs des revendications précédentes, **caractérisé en ce que** les moyens de pesage (6) sont reliés électroniquement à une alimentation (7).

9. Véhicule de levage (10) comprenant un dispositif de levage (1) selon une ou plusieurs des revendications précédentes.

10. Véhicule de levage (10) selon la revendication 9, **caractérisé en ce qu'**il est équipé de dispositifs anti-basculement permettant au moins de déclencher un processus de sécurité lorsqu'une charge maximum prédéterminée est dépassée, et adaptés à cette opération.

11. Véhicule de levage (10) selon la revendication 10, **caractérisé en ce que** le processus de sécurité comprend une ou plusieurs opérations parmi les suivantes :
réduction de la vitesse de déplacement, réduction de la hauteur de levage, blocage des moyens de levage et déclenchement d'une alerte.

12. Véhicule de levage (10) selon la revendication 10 ou 11, **caractérisé en ce que** les dispositifs anti-basculement comprennent au moins des systèmes d'avertissement destinés à déclencher une alerte, et **en ce que** le processus de sécurité comprend une activation des systèmes d'avertissement.

13. Véhicule de levage (10) selon la revendication 12, **caractérisé en ce que** l'alerte est une alerte perceptible par un conducteur, en particulier une alerte qui peut être vue ou entendue.

14. Véhicule de levage (10) selon la revendication 13, **caractérisé en ce que** les systèmes d'avertissement comprennent un tableau d'affichage permettant d'afficher l'alerte à l'attention du conducteur du dispositif de levage, et adapté à cette opération.

15. Véhicule de levage (10) selon une ou plusieurs des revendications 9-14, **caractérisé en ce que** les dispositifs anti-basculement comprennent des moyens de blocage permettant de bloquer les moyens de levage lorsqu'un moment de charge maximum prédéterminé est dépassé, et adaptés à cette opération.
